# EUROPÄISCHE PATENTSCHRIFT

(11) **EP 2 049 372 B1**
(45) Veröffentlichungstag und Bekanntmachung des Hinweises auf die Patenterteilung: **09.12.2009**
(21) Anmeldenummer: 07801497.4
(22) Anmeldetag: 02.08.2007
(51) Int. Cl.: B60T 8/1766

(54) **VERFAHREN ZUR BREMSDRUCKVERTEILUNG AUF DIE ACHSEN EINES FAHRZEUGS**
METHOD FOR BRAKE PRESSURE DISTRIBUTION BETWEEN THE AXLES OF A VEHICLE
PROCÉDÉ DE DISTRIBUTION DE LA PRESSION DE FREINAGE AUX ESSIEUX D'UN VÉHICULE

(30) Priorität: 03.08.2006 DE 102006036280
(43) Veröffentlichungstag der Anmeldung: 22.04.2009
(73) Patentinhaber: Knorr-Bremse Systeme für Nutzfahrzeuge GmbH, 80809 München (DE)
(72) Erfinder: HERGES, Michael, 80935 München (DE)
(74) Vertreter: Schönmann, Kurt
(86) Internationale Anmeldenummer: PCT/EP2007/006852
(87) Internationale Veröffentlichungsnummer: WO 2008/014997

(56) Entgegenhaltungen:
- EP-A- 1 466 800
- DE-A1- 4 007 360

## Beschreibung

### Stand der Technik

Die Erfindung geht aus von einem Verfahren zur Bremsdruckverteilung auf die Achsen eines Fahrzeugs mit Druckmittelbremse, welches bremsbaren Rädern zugeordnete, als Istwertgeber dienende Drehzahlgeber umfasst, wobei die zwischenachsige Bremsdruckverteilung nach Maßgabe einer Differenz zwischenachsiger Raddrehzahlen oder zwischenachsiger Radschlupfwerte an den Achsen geregelt wird und für die Regelung der Bremsdruckverteilung die Überschreitung eines vorgegebenen Grenzwerts durch die Differenz der zwischenachsigen Raddrehzahlen oder der zwischenachsigen Radschlupfwerte bei einer Bremsung dient, nach dem Oberbegriff von Anspruch 1.

Beim Bremsen treten infolge der Verzögerung der Fahrzeugmasse dynamische Achslaständerungen auf. Die Vorderachse wird dabei zusätzlich belastet, die Hinterachse im gleichen Verhältnis entlastet. Dies kann bei kurzen Fahrzeugen mit hohem und/oder weit vorne liegendem Schwerpunkt, d.h. wenn ein ungünstiges Verhältnis der Schwerpunkthöhe zum Radstand vorliegt, wie dies beispielsweise im Nutzfahrzeugbereich bei Zugfahrzeugen einer Zugfahrzeug-Sattelanhängerkombination im Solobetrieb der Fall ist, einerseits zu einem Vorneüberkippen, d.h. zu einem Kopfstand des Fahrzeugs führen. Andererseits nimmt die Seitenführung der Hinterräder ab, was vor allem bei einem Bremsvorgang in einer Kurve kritisch ist.

Um diesen Problemen zu begegnen, ist beispielsweise aus der DE 27 55 156 A ein lastabhängiger Bremskraftbegrenzer bekannt. Dieser wird bei stärkeren Bremsungen, bei denen infolge der eintretenden Achslaständerungen die Hinterachse blockieren würde, wirksam. Er verhindert von einem eingestellten Wert an den weiteren Anstieg des Drucks zumindest in den Hinterachs-Bremszylindern. Da zwar die Last gemessen wird, jedoch nicht die für die kritische Kippneigung und Hinterachsentlastung wesentliche Schwerpunkthöhe, ist dieses Verfahren zu ungenau. Weiterhin beziehen sich fest programmierte Grenzwerte oder auch achslastabhängige Kennlinien für den Bremsdruck stets auf Nutzfahrzeuge mit einer bestimmten Ausrüstung und einem bestimmten Aufbau. Werden diese Parameter jedoch verändert, beispielsweise im Wege einer Umrüstung des Nutzfahrzeugs, entsprechen die fest gelegten Druckbegrenzungswerte oder achslastabhängigen Kennlinien nicht mehr den aktuellen Gegebenheiten.

Zur Verbesserung der Bremsstabilität ist aus der DE 40 07 360 A1 eine gattungsgemäße Differenzschlupfregelung bekannt, bei welcher die zwischenachsige Bremsdruckverteilung nach Maßgabe einer bezogenen Differenz zwischenachsiger Raddrehzahlen an den Achsen geregelt wird und für die Regelung der Bremsdruckverteilung die Überschreitung eines vorgegebenen Grenzwerts durch die bezogene Differenz der zwischenachsigen Raddrehzahlen bei einer Bremsung dient.

Der vorliegenden Erfindung liegt die Aufgabe zugrunde, ein Verfahren der eingangs erwähnten Art derart weiter zu entwickeln, dass ein Kriterium für instabile Fahr- und Bremszustände auf möglichst einfache Weise ermittelt wird, als Basis für geeignete Gegenmaßnahmen.

Diese Aufgabe wird erfindungsgemäß durch die Merkmale von Anspruch 1 gelöst.

### Vorteile der Erfindung

Die Erfindung beruht auf dem Gedanken, dass bei einer Differenzschlupfregelung auf der Basis der Abhängigkeit zwischen wenigstens dem Bremsdruck an der Hinterachse und der Verzögerung des Fahrzeugs nach wenigstens zwei vorangehenden Betriebsbremsungen durch Extrapolation oder durch Interpolation ein kritischer Verzögerungswert ermittelt wird, bei welchem der Bremsdruck an der Hinterachse kleiner als ein vorgegebener Bremsdruckgrenzwert ist.

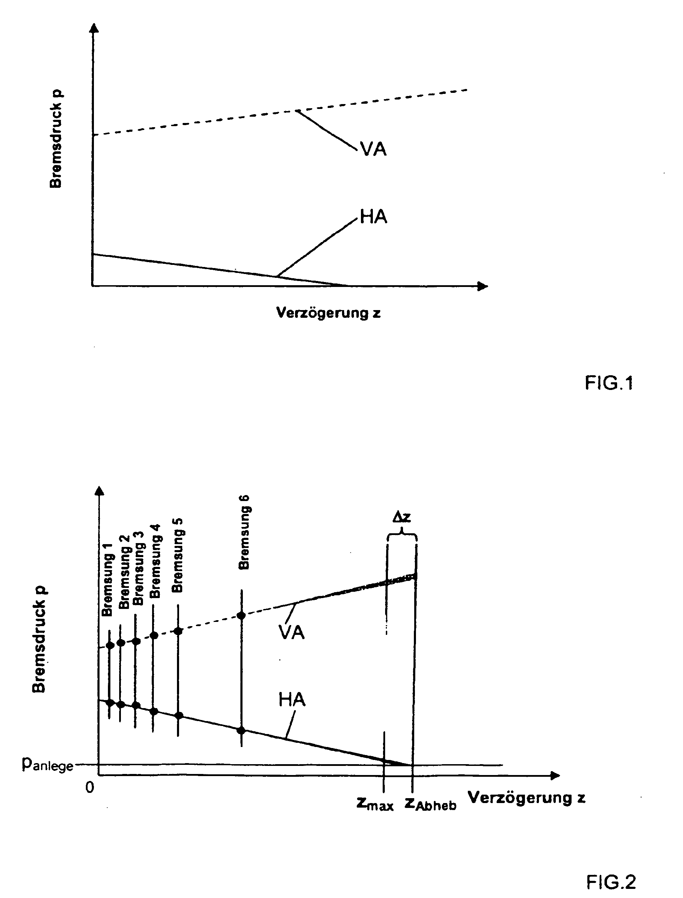

Bei einer solchen Differenzschlupfregelung, bei welcher der Differenzschlupf zwischen Vorderachse und Hinterachse beispielsweise auf Null eingeregelt wird, ergeben sich für die Bremsdrücke p in Abhängigkeit von der Verzögerung z näherungsweise lineare Kennlinien, beispielsweise die in Fig.1 gezeigte Kennlinie für den Bremsdruck p an der Vorderachse VA und den Bremsdruck p an der Hinterachse HA. Da es sich bei den beiden Kennlinien um Geraden handelt, reicht es zur Ermittlung des Verlaufs dieser Geraden aus, zwei Stützpunkte bestehend aus jeweils einem Verzögerungswert z und einem diesem zugeordneten Bremsdruckwert p zu ermitteln und die weiteren Werte der linearen Bremsdruck-Verzögerungsbeziehung durch Interpolation bzw. durch Extrapolation zu ermitteln. Das Verfahren hat den Vorteil, dass mit jeder Bremsung mehr solcher Stützpunkte ermittelt werden und der Verlauf der Kennlinie Bremsdruck-Verzögerung dadurch noch genauer bestimmbar ist.

Um den kritischen Verzögerungswert zu ermitteln, bei welchem die Hinterachse derart entlastet ist, dass ein instabiler Fahrzustand entstehen würde, also dort, wo gemäß der Differentialschlupfregelung der Bremsdruck an der Hinterachse kleiner als ein vorgegebener Bremsdruckgrenzwert sein müsste, wird der Schnittpunkt der den Bremsdruckverlauf an der Hinterachse repräsentierenden Geraden mit einer horizontalen Linie, die diesen Bremsdruckgrenzwert repräsentiert, bestimmt. Der Wert der Verzögerung z an diesem Schnittpunkt ist dann der kritische Verzögerungswert.

Wenn der Bremsdruckgrenzwert an der Hinterachse beispielsweise gleich Null ist, also gemäß der Differentialdruckregelung aufgrund einer Hinterachsentlastung beim Bremsen kein Bremsdruck mehr in die Bremszylinder der Hinterachse eingesteuert werden soll, wird in der Kennlinie der Schnittpunkt mit der Achse bestimmt, an welcher die Verzögerung z angetragen ist.

Alternativ kann als Bremsdruckgrenzwert beispielsweise auch der Anlegedruck oder Lösedruck der Bremsbacken oder Bremsbeläge an eine oder von einer Bremsscheibe oder Bremstrommel der Hinterachsbremse verwendet werden.

Denn dieser Anlege- oder Lösebremsdruck ist sehr klein und reicht gerade aus, um gerade noch keine bzw. eine sehr geringe Bremskraft zu erzeugen.

Damit können die Bremskräfte an den Hinterrädern beladungs- und schwerpunkthöhenabhängig nach dem Bremsdruckgrenzwert so eingestellt werden, dass unter der Prämisse einer für ein stabiles Fahrverhalten ausreichenden Seitenführung der Hinterräder eine möglichst hohe Abbremsung erzielt wird.

Um instabile Fahr- und Bremszustände zu vermeiden, kann dann die maximale Verzögerung des Fahrzeugs beispielsweise auf einen Wert begrenzt werden, welcher kleiner als der kritische Verzögerungswert ist.

Alternativ könnte der Bremsdruck an der Hinterachse bereits vor Erreichen der maximalen Verzögerung auf kleinere Werte als die nach der Differenzschlupfregelung vorgegebenen eingestellt werden. Dies hat den Vorteil, dass die Seitenführung der Hinterachse weiter verbessert wird. Da die Vorderachse wegen der hohen dynamischen Achslastverlagerung noch weit von ihrer Blockiergrenze entfernt ist, führt ies zu einem neutraleren Fahrverhalten.

Das Verfahren zeichnet sich durch seine große Einfachheit aus, mithin sind lediglich im Rahmen von Antiblockiersystemen ohnehin vorhandene Drehzahlgeber sowie ein ebenso ohnehin vorhandenes Bremssteuergerät notwendig, in welchem die Routinen der Differentialschlupfregelung ablaufen.

Genaueres geht aus der folgenden, Beschreibung eines Ausführungsbeispiels hervor.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: eine Kennlinie für Bremsdrücke p in Abhängigkeit von der Verzögerung z, welche sich aus einer Differentialregelung ergibt;
- Fig.2: eine weitere Kennlinie für Bremsdrücke p in Abhängigkeit von der Verzögerung z, anhand welcher der kritische Verzögerungswert ermittelt wird;
- Fig.3: eine weitere Kennlinie für Bremsdrücke p in Abhängigkeit von der Verzögerung z, bei welcher gegenüber der Kennlinie von Fig.2 der Hinterachsbremsdruck vorzeitig abgesenkt und der Vorderachsdruck erhöht wird.

### Beschreibung der Ausführungsbeispiele

Grundlage des Verfahrens zur Bremsdruckverteilung auf die Achsen eines Nutzfahrzeugs mit Druckmittelbremse bildet eine Differentialschlupfregelung.

Eine solche, an sich bekannte Differentialschlupfregelung umfasst bremsbaren Rädern zugeordnete, als Istwertgeber dienende Drehzahlgeber, wobei die zwischenachsige Bremsdruckverteilung nach Maßgabe einer Differenz zwischenachsiger Raddrehzahlen an den Achsen oder einer Differenz zwischenachsiger Radschlupfwerte geregelt wird und für die Regelung der Bremsdruckverteilung die Überschreitung eines vorgegebenen Grenzwerts durch die Differenz der zwischenachsigen Raddrehzahlen oder der zwischenachsigen Radschlupfwerte bei einer Bremsung dient. Verfahren zur Differentialschlupfregelung sind hinlänglich bekannt, beispielsweise aus der DE 40 07 360 A1. Deshalb soll hier nicht weiter darauf eingegangen werden.

Bei dem erfindungsgemäßen Verfahren wird im Rahmen einer Differenzschlupfregelung auf der Basis der Abhängigkeit zwischen dem Bremsdruck p an der Hinterachse und der Verzögerung z des Fahrzeugs nach wenigstens zwei vorangehenden Betriebsbremsungen durch Extrapolation oder durch Interpolation ein kritischer Verzögerungswert z_{abheb} ermittelt, bei welchem wenigstens der Bremsdruck p an der Hinterachse HA kleiner als ein vorgegebener Bremsdruckgrenzwert ist.

Bei einer solchen Differenzschlupfregelung, bei welcher der Schlupf an der Vorderachse VA und an der Hinterachse HA vorzugsweise gleich groß und deshalb der Differenzschlupf zwischen Vorderachse VA und Hinterachse HA beispielsweise auf Null eingeregelt wird, ergeben sich für die Bremsdrücke p in Abhängigkeit von der Verzögerung z näherungsweise lineare Kennlinien für den Bremsdruck p an der Vorderachse VA und den Bremsdruck p an der Hinterachse HA, wie sie in Fig.2 gezeigt sind. Dabei nimmt nach der Differenzschlupfregelung der Bremsdruck p an der Hinterachse HA mit zunehmender Verzögerung z linear ab, weil die entlastete Hinterachse HA ansonsten überbremst wird und keine Seitenführungskräfte mehr übernehmen kann.

Da es sich bei den beiden Kennlinien um Geraden handelt, reicht es zur Ermittlung des Verlaufs dieser Geraden aus, zwei Stützpunkte aus zwei Bremsungen, in Fig.2 beispielsweise Bremsung 1 und Bremsung 2 bestehend aus jeweils einem Verzögerungswert z₁, z₂ und einem diesem zugeordneten Bremsdruckwert p₁, p₂ zu ermitteln und die weiteren Werte der linearen Bremsdruck-Verzögerungsbeziehung durch Interpolation bzw. durch Extrapolation zu ermitteln. Je mehr einem kritischen Ereignis, wie beispielsweise einer Kurvenfahrt mit starker Abbremsung Bremsungen wie beispielsweise Bremsung 1 bis Bremsung 6 vorangehen, desto mehr Stützpunkte für die beiden Geraden ergeben sich. Besonders bevorzugt werden zwei Betriebsbremsungen, beispielsweise Bremsung 1 mit niedriger Verzögerung und Bremsung 4 mit demgegenüber deutlich höherer Verzögerung und die weiteren Werte der linearen Bremsdruck-Verzögerungsbeziehung bei höheren Verzögerungen z durch Extrapolation ermittelt.

Um den kritischen Verzögerungswert z_{abheb} zu ermitteln, bei welchem die Hinterachse derart entlastet ist, dass ein instabiler Fahrzustand entstehen würde bzw. die Hinterachse von der Fahrbahn abhebt, also dort, wo gemäß der Differentialschlupfregelung der Bremsdruck an der Hinterachse kleiner als ein vorgegebener Bremsdruckgrenzwert sein müsste, wird der Schnittpunkt der den Bremsdruckverlauf an der Hinterachse HA repräsentierenden Geraden mit einer horizontalen Linie, die diesen Bremsdruckgrenzwert repräsentiert, bestimmt. Der Wert der Verzögerung an diesem Schnittpunkt ist dann der kritische Verzögerungswert z_{abheb}.

Wenn der Bremsdruckgrenzwert beispielsweise gleich Null ist, also gemäß der Differentialdruckregelung aufgrund einer Hinterachsentlastung beim Bremsen kein Bremsdruck mehr in die Bremszylinder der Hinterachse eingesteuert werden soll, wird in der Kennlinie beispielsweise der Schnittpunkt mit einer horizontalen Achse bestimmt, welche den Bremsdruck Null repräsentiert und folglich der Achse entspricht, an welcher die Verzögerung z angetragen ist.

Alternativ kann als Bremsdruckgrenzwert beispielsweise auch der Anlegedruck p_{anlege} oder Lösedruck der Bremsbacken oder Bremsbeläge an eine oder von einer einer Bremsscheibe oder Bremstrommel der Hinterachsbremse verwendet werden, wie in Fig.2 der Fall ist. Denn dieser Anlegedruck p_{anlege} ist sehr klein und reicht gerade aus, um gerade noch keine bzw. eine sehr geringe Bremskraft zu erzeugen.

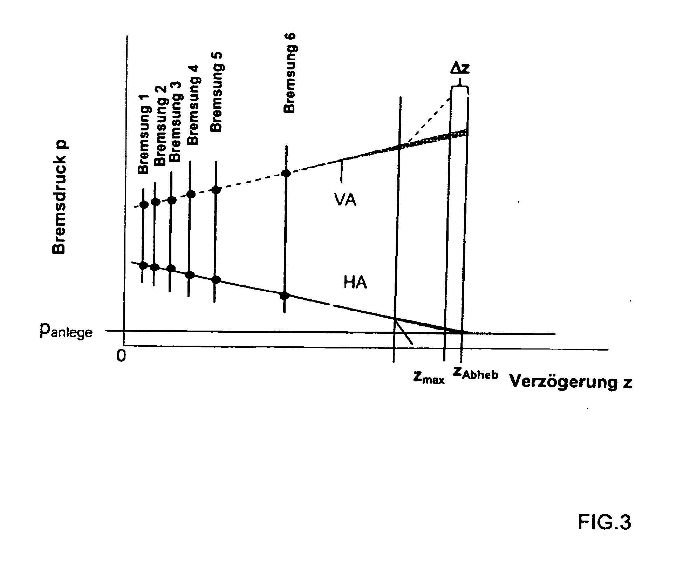

Um instabile Fahr- und Bremszustände zu vermeiden, kann dann als Konsequenz die maximale Verzögerung zₘₐₓ des Fahrzeugs beispielsweise auf einen Wert z_{abheb} - Δz begrenzt werden, welcher kleiner als der kritische Verzögerungswert z_{abneb} ist. Alternativ könnte der Bremsdruck an der Hinterachse HA auch bereits vor Erreichen der maximalen Verzögerung zₘₐₓ auf kleinere Werte als die nach der Differenzschlupfregelung vorgegebenen Werte eingestellt und der Vorderachsdruck entsprechend angehoben werden, wie Fig.3 zeigt. Dies hat den Vorteil, dass die Seitenführung der Hinterachse HA weiter verbessert wird. Da die Vorderachse VA wegen der hohen dynamischen Achslastverlagerung noch weit von ihrer Blockiergrenze entfernt ist, führt ies zu einem neutraleren Fahrverhalten.

## Patentansprüche

1. Verfahren zur Bremsdruckverteilung auf die Achsen eines Fahrzeugs mit Druckmittelbremse, welches bremsbaren Rädern zugeordnete, als Istwertgeber dienende Drehzahlgeber umfasst, wobei die zwischenachsige Bremsdruckverteilung nach Maßgabe einer Differenz zwischenachsiger Raddrehzahlen oder zwischenachsiger Radschlupfwerte an den Achsen geregelt wird und für die Regelung der Bremsdruckverteilung die Überschreitung eines vorgegebenen Grenzwerts durch die Differenz der zwischenachsigen Raddrehzahlen oder der zwischenachsigen Radschlupfwerte bei einer Bremsung dient (Differenzschlupfregelung), **dadurch gekennzeichnet, dass** auf der Basis der Abhängigkeit zwischen wenigstens dem Bremsdruck (p) an der Hinterachse (HA) und der Verzögerung (z) des Fahrzeugs nach wenigstens zwei vorangehenden Betriebsbremsungen durch Interpolation oder Extrapolation ein kritischer Verzögerungswert (z_{abheb}) ermittelt wird, bei welchem wenigstens der Bremsdruck an der Hinterachse (HA) kleiner als ein vorgegebener Bremsdruckgrenzwert ist.

2. Verfahren nach Anspruch 1, **dadurch gekennzeichnet, dass** der vorgegebene Bremsdruckgrenzwert für die Hinterachse (HA) gleich Null ist oder einem Anlegedruck der Bremsen der Hinterachse (HA) entspricht.

3. Verfahren nach Anspruch 1 oder 2, **dadurch gekennzeichnet, dass** der vorgegebene Grenzwert für die Differenz der zwischenachsigen Raddrehzahlen oder der zwischenachsigen Radschlupfwerte gleich Null ist.

4. Verfahren nach wenigstens einem der vorhergehenden Ansprüche, **dadurch gekennzeichnet, dass** die maximale Verzögerung (zₘₐₓ) des Fahrzeugs bei einer Bremsung auf einen Wert begrenzt wird, welcher kleiner als der kritische Verzögerungswert (z_{abheb}) ist.

5. Verfahren nach Anspruch 4, **dadurch gekennzeichnet, dass** der Bremsdruck (p) an der Hinterachse (HA) bereits vor Erreichen der maximalen Verzögerung (zₘₐₓ) auf kleinere Werte als die nach der Differenzschlupfregelung vorgegebenen eingestellt wird.

## Claims

1. A method for brake pressure distribution between the axles of a vehicle with a pressure medium brake, which vehicle comprises rotational speed sensors which are assigned to brakeable wheels and serve as actual value sensors, wherein the brake pressure distribution between the axles is controlled in accordance with a difference in wheel speeds between the axles or in wheel slip values between the axles at the axles, and the transgression of a predefined limiting value by the difference in wheel speeds between the axles or the wheel slip values between the axles during a braking operation is used to control the brake force distribution (differential slip control), **characterized in that** a critical deceleration value (z_{abheb}) at which at least the brake pressure at the rear axle (HA) is lower than a predefinable brake pressure limiting value is acquired by interpolation or extrapolation on the basis of the dependence between at least the brake pressure (p) at the rear axle (HA) and the deceleration (z) of the vehicle after at least two preceding service braking operations.

2. The method as claimed in claim 1, **characterized in that** the predefined brake pressure limiting value for the rear axle (HA) is equal to zero or corresponds to an application pressure of the brakes of the rear axle (HA).

3. The method as claimed in claim 1 or 2, **characterized in that** the predefined limiting value for the difference in wheel speeds between the axles or in wheel slip values between the axles is equal to zero.

4. The method as claimed in at least one of the preceding claims, **characterized in that** the maximum deceleration (zₘₐₓ) of the vehicle during a braking operation is limited to a value which is smaller than the critical deceleration value (z_{abheb}).

5. The method as claimed in claim 4, **characterized in that** the brake pressure (p) at the rear axle (HA) is set to smaller values than those predefined after the differential slip control process even before the maximum deceleration (zₘₐₓ) has been reached.

## Revendications

1. Procédé de répartition de la pression de freinage aux essieux d'un véhicule pourvu d'un frein commandé un milieu sous pression, qui comprend des télé transmetteurs de vitesse affectés aux roues aptes à être freiné, qui sert en tant que capteur d'une valeur instantanée, dans lequel la répartition de la pression de freinage parmi les essieux est réglée en fonction d'une différence entre les vitesses des roues parmi les essieux ou entre des valeurs de patinage des roues aux essieux parmi les essieux et dans lequel le dépassement d'une valeur limite prédéterminée par la différence entre les vitesses des roues parmi les essieux ou entre les valeurs de patinage des roues parmi les essieux au cas de serrage des freins sert à régler la répartition de la pression de freinage (réglage de patinage différentiel), **caractérisé en ce qu'**une valeur de décélération critique (z_{abheb}) est établie sur la base de la dépendance entre au moins la pression de freinage (p) à l'essieu de derrière (HA) et la décélération (z) du véhicule après au moins deux cycles précédentes de serrage du frein de service par interpolation ou extrapolation, à laquelle valeur de décélération au moins la pression de freinage à l'essieu de derrière (HA) est plus petite qu'une valeur limite prédéterminée de pression de freinage.

2. Procédé selon la revendication 1, **caractérisé en ce que** ladite valeur limite prédéterminée de pression de freinage pour l'essieu de derrière (HA) est égale à zéro ou correspond à un niveau de pression de serrage des freins audit essieu de derrière (HA).

3. Procédé selon la revendication 1 ou 2, **caractérisé en ce que** ladite valeur limite prédéterminée de la différence entre les vitesses des roues parmi les essieux ou entre les valeurs de patinage des roues parmi les essieux est égale à zéro.

4. Procédé selon au moins une quelconque des revendications précédentes, **caractérisé en ce que** la décélération maximale (zₘₐₓ) du véhicule au cas de serrage des freins est limitée à une valeur plus petite que la valeur de décélération critique (z_{abheb}).

5. Procédé selon la revendication 4, **caractérisé en ce que** déjà avant que la décélération maximale (zₘₐₓ) est atteinte, la pression de freinage (p) audit essieu de derrière (HA) est réglée à des valeurs plus petites que celles prédéterminées en correspondance avec le réglage de patinage différentiel.
